(19) Europäisches Patentamt
European Patent Office
Office européen des brevets

(11) **EP 4 287 066 B1**

(12) **EUROPÄISCHE PATENTSCHRIFT**

(45) Veröffentlichungstag und Bekanntmachung des Hinweises auf die Patenterteilung:
**15.05.2024 Patentblatt 2024/20**

(21) Anmeldenummer: **22176561.3**

(22) Anmeldetag: **31.05.2022**

(51) Internationale Patentklassifikation (IPC):
**G06K 7/14** *(2006.01)*

(52) Gemeinsame Patentklassifikation (CPC):
**G06K 7/1447; G06K 7/1486**

(54) **BESTIMMEN DER MODULGRÖSSE EINES OPTISCHEN CODES**

DETERMINING THE MODULE SIZE OF AN OPTICAL CODE

DÉTERMINATION DE LA TAILLE DE MODULE D'UN CODE OPTIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**06.12.2023 Patentblatt 2023/49**

(73) Patentinhaber: **SICK AG**
**79183 Waldkirch (DE)**

(72) Erfinder:
• **Müller, Romain**
**79252 Stegen (DE)**
• **Schüler, Pascal**
**79331 Teningen (DE)**

(56) Entgegenhaltungen:
**EP-A1- 1 580 683     CN-A- 112 329 495**
**JP-A- H06 325 197**

**Beschreibung**

Die Erfindung betrifft ein Verfahren zum Bestimmen der Modulgröße eines optischen Codes und einen Codeleser nach dem Oberbegriff von Anspruch 1 beziehungsweise 14.

Codeleser sind von Supermarktkassen, zur automatischen Paketidentifikation, Sortierung von Postsendungen, von der Gepäckabfertigung in Flughäfen und aus anderen Logistikanwendungen bekannt. In einem Codescanner wird ein Lesestrahl mittels eines Drehspiegels oder eines Polygonspiegelrads quer über den Code geführt. Ein kamerabasierter Codeleser nimmt mittels eines Bildsensors Bilder der Objekte mit den darauf befindlichen Codes auf, und eine Bildauswertungssoftware extrahiert aus diesen Bildern die Codeinformation. Kamerabasierte Codeleser kommen problemlos auch mit anderen Codearten als eindimensionalen Strichcodes zurecht, die wie ein Matrixcode auch zweidimensional aufgebaut sind und mehr Informationen zur Verfügung stellen.

In einer wichtigen Anwendungsgruppe werden die codetragenden Objekte an dem Codeleser vorbei gefördert. Ein Codescanner erfasst dabei die jeweils nacheinander in seinen Lesebereich geführten Codes. Alternativ liest in einem kamerabasierten Codeleser eine Zeilenkamera die Objektbilder mit den Codeinformationen sukzessive und zeilenweise mit der Relativbewegung ein. Mit einem zweidimensionalen Bildsensor werden regelmäßig Bilddaten aufgenommen, die sich je nach Aufnahmefrequenz und Fördergeschwindigkeit mehr oder weniger überlappen. Damit die Objekte in beliebiger Orientierung auf dem Förderer angeordnet werden können, sind oft mehrere Codeleser an einem Lesetunnel vorgesehen, um Objekte von mehreren oder allen Seiten aufzunehmen.

Die Bilddaten werden vorzugsweise schon unmittelbar, on-the-fly, in einem FPGA (Field Programmable Gate Array) vorverarbeitet, und dabei können mit den Bilddaten Zusatzinformationen oder Metadaten für einen weiterverarbeitenden Mikroprozessor gespeichert werden. Typische Vorverarbeitungsschritte betreffen die Binarisierung, mit der aus einem Grauwertbild ein Schwarz-Weiß-Bild wird, oder die Segmentierung, in der interessierende Bereiche (ROI, Region of Interest) mit Codekandidaten aufgefunden werden. So beschreibt die EP 2 003 599 A1 einen optoelektronischen Sensor und ein Verfahren zur Erfassung von Codes, in dem ein Binarisierer für eine Umwandlung eines Farb- oder Grauwertbildes in ein Binärbild bereits während des Empfangs und/oder in Echtzeit ausgebildet ist, indem ein jeweils eingelesener Abschnitt binarisiert wird, noch während die weiteren Abschnitte eingelesen werden. Die EP 2 555 160 B1 findet in einer Vorverarbeitung auf einem FPGA interessierende Bereiche oder Codekandidaten anhand eines Kontrastmaßes. In der EP 3 916 633 A1 werden erste Schichten eines neuronalen Netzes zu Segmentierung schon während des Einlesens auf einem FPGA durchlaufen. Die EP 1 365 577 A1 offenbart ein Verfahren zum Betrieb eines optoelektronischen Sensors, in dem ein Bild bereits während des Empfanges komprimiert wird. Dabei wird jeweils die Fähigkeit des FPGAs ausgenutzt, viele einfache Rechenoperationen wie beispielsweise Matrixmultiplikationen parallel in Echtzeit auszuführen. Sequentielle, komplexere Rechenoperationen wie diejenigen eines Decoders zum Lesen optischer Codes bleiben einem Mikroprozessor vorbehalten, der dafür auf die bereitgestellten Bilddaten und mögliche Vorverarbeitungsergebnisse zurückgreift.

Eine charakteristische Größe eines optischen Codes ist die Modulgröße. Ein Modul ist das kleinste Element des Codes, und die Codeelemente oder Zeichen sind aus einem oder mehreren Modulen zusammengesetzt. Die Modulgröße ist ein Maß für die Ausdehnung des Moduls und wird in Pixel pro Modul (ppm) angegeben. Somit hat ein Strich bei einem Barcode eine Breite, die dem Ein- oder einem Vielfachen der Modulgröße entspricht, und analog gilt dies für die beiden Dimensionen eines dunklen oder hellen Feldes in einem zweidimensionalen Code. Eine große Modulgröße bedeutet, dass der Code hochaufgelöst in den Bilddaten oder Grauwertprofilen erfasst ist. Folglich wird das Decodieren umso herausfordernder, je kleiner die Modulgröße wird, besonders, wenn sie einen Bereich von zwei oder noch weniger ppm erreicht.

Es wäre von Vorteil, wenn der Decoder schon anfänglich eine gute Abschätzung vor allem im Falle kleiner Modulgrößen kennen würde. Dann ließen sich nämlich Maßnahmen ergreifen, um auch den schlecht aufgelösten Code noch zu lesen. Ein Beispiel ist die sogenannte Superresolution. Damit sind Verfahren gemeint, die mehrere niedriger aufgelöste Bilder zu einem höher aufgelösten Bild verrechnen. Umgekehrt kann womöglich auf ein aufwändiges Decodierverfahren für einen ohnehin bei großer Modulgröße hochaufgelöst erfassten Code verzichtet werden. Allgemein ist es hilfreich für einen Leseerfolg des Decoders, den Code charakterisierende Parameter wie hier die Modulgröße vorab zu kennen. Auf diese Weise kann der Parameterraum des Decoders optimal eingestellt werden, aber nur dann, wenn die Modulgröße rechtzeitig zur Verfügung steht.

Tatsächlich ist aber bei herkömmlichen Verfahren die Modulgröße erst im Nachhinein nach erfolgreichem Decodiervorgang bekannt. Dann ist klar, welche Zeichen der Code enthält, und anhand der Gesamtgröße des Codes in den Bilddaten ist dann auch die Modulgröße mit großer Genauigkeit berechenbar. Bei einem Barcode beispielsweise wird anhand der Zeichen die Gesamtzahl der Module zwischen Start- und Stoppmuster bestimmt und die Ausdehnung des Codes in Pixeln durch diese Gesamtzahl dividiert. Somit ist die Modulgröße ein Ergebnis des Decodierens und keine Unterstützung dafür.

Im Prinzip ist die Modulgröße nichts anderes als der kleinste Abstand zwischen zwei Kanten des aufgenommenen Grauwertprofils. Solche Kanten, also Übergänge zwischen den hellen und dunklen Codeelementen, lassen sich durch die Extrema in der Ableitung des Grauwertprofils auffinden. Das Ergebnis hängt aber empfindlich davon ab, wie genau die Kantenpositionen lokalisiert werden. Besonders bei sehr kleinen Modulgrößen wird dies schwierig, da die Kantenpositionen zunächst nur diskret und damit nicht subpixelgenau vorliegen. Außerdem sind die Kantenpositionen rauschanfällig. Schon im Grundsatz ist ein rein auf Kanten basierendes Verfahren eine Binarisierung, mit der die ursprüngliche Grauwertinformation von regelmäßig acht Bit oder sogar mehr auf nur ein Bit reduziert wird, und auch dieser Informationsverlust begrenzt die mögliche Genauigkeit der Bestimmung der Modulgröße.

Die US 5 053 609 bestimmt die physische Ausdehnung eines 2D-Codes. An dessen Rand ist eine alternierende Folge von hellen und dunklen Codeelementen angeordnet, die gezählt werden, um die Informationsdichte zu bestimmen. Daraus lässt sich die Modulgröße rekonstruieren, aber nur, wenn die alternierenden Codeelemente am Rand vorhanden sind und als solche zählbar erfasst sind.

Es ist im Bereich des Codelesens bekannt, ein Grauwerthistogramm der Bilddaten zu erzeugen. Das wird aber typischerweise für ganz andere Zwecke verwendet, beispielsweise um eine gleichmäßigere Ausleuchtung zu erhalten oder zu emulieren oder um eine geeignete Binarisierungsschwelle zu ermitteln. Die EP 3 789 906 A1 nutzt ein Grauwerthistogramm, um die Modulgröße zu bestimmen.

Die CN 112 329 495 A offenbart ein Barcodeleseverfahren, das Bilder der Barcodes aufnimmt und auf eine vorgegebene Modulgröße reskaliert. Um die dafür erforderliche ursprüngliche Modulgröße der aufgenommenen Barcodes zu bestimmen, wird ein Histogramm der Breiten der einzelnen Codeelemente gebildet. Die Breite bei dem ersten Peak in diesem Histogramm wird als Modulgröße herangezogen.

In der JP H06 325 197 A wird ein Barcodeleseverfahren vorgestellt, in dem ebenfalls die Modulbreite bestimmt wird. Dazu wird eine Statistik der Erkennungshäufigkeiten von Breiten der Striche und Lücken gebildet und ausgewertet.

Die EP 1 580 683 A1 verweist einleitend auf die JP H06 325 197 A, sieht aber Probleme bei Aufnahmen mit geringer Auflösung und Barcodes mit einer Vielzahl von Breiten. Sie verwendet dann eine Einheitsbreite und den Vergleich mit einem vorgegebenen Barcodemuster, wobei die Einheitsbreite in mehreren Versuchen variiert werden kann.

Es ist daher Aufgabe der Erfindung, eine verbesserte Möglichkeit zur Bestimmung der Modulgröße anzugeben.

Diese Aufgabe wird durch ein Verfahren zum Bestimmen der Modulgröße eines optischen Codes und einen Codeleser nach Anspruch 1 beziehungsweise 14 gelöst. Die Schritte zum Bestimmen der Modulgröße und auch die weiteren optionalen Schritte wie beispielsweise diejenigen zum Lesen eines Barcodes laufen automatisch ab, es handelt sich um ein computerimplementiertes Verfahren. Der optische Code kann ein Barcode, aber auch ein zweidimensionaler Code nach einem der diversen bekannten Standards sein. In dieser Beschreibung wird der Begriff Barcode synonym zu einem eindimensionalen optischen Code verwendet, abweichend von Teilen der Literatur, die auch zweidimensionale Codes bisweilen als Barcodes bezeichnet.

Es werden Bilddaten erzeugt, die den Code enthalten und die vorzugsweise zumindest grob auf den Codebereich zugeschnitten sind. Bilddaten werden typischerweise mit einem Bildsensor eines kamerabasierten Codelesers aufgenommen, aber auch das Intensitätsprofil eines Barcodescanners wird hier mit dem Begriff Bilddaten umfasst. Die Bilddaten liegen vorzugsweise auf einem Pixelraster mit m x n Pixeln, das mit einem Matrixsensor in einer Aufnahme oder alternativ sukzessive in mehreren aneinander gereihten Zeilen aufgenommen wird. Die Modulgröße wird aus den Abständen zwischen Hell-Dunkel-Übergängen in den Bilddaten bestimmt. Damit sind Übergänge in beide Richtungen hell nach dunkel oder dunkel nach hell gemeint, die Kanten zwischen den Codeelementen definieren.

Die Erfindung geht von dem Grundgedanken aus, eine Häufigkeitsverteilung der in den Bilddaten vorkommenden Breiten von hellen und dunklen Bereichen zu bilden. Dazu wird die Abfolge von Pixeln längs mindestens einer Linie durch den Code ausgewertet, wobei jeweils gezählt wird, wie viele helle Pixel aufeinanderfolgen oder wie viele dunkle Pixel aufeinanderfolgen. Die Länge einer solchen Pixelfolge entspricht dem Abstand zwischen zwei Hell-Dunkel-Übergängen oder Kanten in den Bilddaten, eine jeweilige Pixelfolge beginnt an einer Kante und endet an der nächsten Kante längs der Linie. Die Häufigkeitsverteilung zählt mit anderen Worten, wie viele helle oder dunkle Einzelpixel, Zweierreihen bis hin zu n-Reihen von Pixeln der gleichen Helligkeitsklasse es gibt, also dunkle oder helle Pixel. Die Linie, längs derer die aufeinanderfolgenden Pixel aufgereiht sind, ist vorzugsweise gerade, alternativ kann sie gezielt gekrümmt sein, um beispielsweise einer nicht ebenen Codeunterlage zu folgen. Je größer ein Codeelement ist, das die Linie jeweils überstreicht, desto länger sind die Pixelfolgen einer Helligkeitsklasse. Die Häufigkeitsverteilung sammelt damit sämtliche vorkommenden Pixelfolgen. Deshalb ist die Information über die Modulgröße vielfach in der Häufigkeitsverteilung enthalten und kann auf diesem Wege statistisch geschätzt werden.

Da die der Häufigkeitsverteilung zugrundeliegenden Daten Pixel sind, handelt es sich originär um eine diskrete Häufigkeitsverteilung, die durch ein Histogramm beschrieben werden kann. Deshalb wird häufig in dieser Beschreibung der Begriff Histogramm stellvertretend für die Häufigkeitsverteilung verwendet. Aber es ist damit nicht ausgeschlossen, dass die diskrete Beschreibungsebene verlassen wird und beispielsweise eine ursprünglich diskrete Häufigkeitsverteilung durch eine glatte Funktion ersetzt oder angenähert wird, etwa um beispielsweise die Auswertung analytisch fortzusetzen. Das Histogramm kann anschaulich als Breitenhistogramm bezeichnet werden, denn es wird in den Bins gezählt, wie oft längs der Linie eine Aneinanderreihung dunkler oder heller Pixel einer jeweiligen Anzahl vorkommt, und diese Anzahl entspricht der Breite des Codeelements in Linienrichtung. Es sei sicherheitshalber noch betont, dass die erfindungsgemäß bestimmte Häufigkeitsverteilung keine Helligkeitsverteilung beziehungsweise kein Grauwerthistogramm wie im einleitend diskutierten zitierten Stand der Technik ist.

Die Erfindung hat den Vorteil, dass eine einfache und schnelle Berechnung der Modulgröße ermöglicht wird, die in sehr frühen Phasen der Bildverarbeitungskette stattfinden kann und insbesondere kein erfolgreiches Decodieren voraussetzt. Das Verfahren ist besonders geeignet in einer zweigeteilten Architektur mit Vorverarbeitung beispielsweise durch ein FPGA und anschließender Decodierung anhand von Metadaten der Vorverarbeitung beispielsweise in einem Mikroprozessor. Der Mikroprozessor kann die Modulgröße anhand der Metadaten abschätzen, vorzugsweise Metadaten in Form der Häufigkeitsverteilung, ohne selbst dafür nochmals zeitaufwändig auf die Bilddaten zugreifen zu müssen. Eine große Modulgröße wird im Allgemeinen besser abgeschätzt. Bei kleinen Modulgrößen ist durch Verwaschungseffekte und dergleichen ein genaues Ergebnis sehr viel schwieriger zu erfassen. Allerdings ist schon die Information, dass es sich um eine kleine Modulgröße handelt, ohne genauere Quantifizierung, für das weitere Vorgehen zum Decodieren von großem Wert. Schließlich ist durch das erfindungsgemäße Verfahren das Gewinnen von Zusatzinformationen möglich, beispielsweise die Wertigkeit eines Barcodes, die eine gezielte Auswahl von dazu passenden Decodieralgorithmen ermöglicht, oder die genaue Orientierung des Codes bezüglich des Pixelrasters der Bilddaten.

Bevorzugt wird eine dunkle Häufigkeitsverteilung für dunkle Pixelfolgen und eine helle Häufigkeitsverteilung für helle Pixelfolgen gebildet. Dunkle Häufigkeitsverteilung und helle Häufigkeitsverteilung sind hierbei nur als Namen der entsprechenden Häufigkeitsverteilungen zu verstehen. Die Häufigkeiten werden für die beiden möglichen dunklen und hellen Codeelemente, insbesondere bei Barcodes die Balken und Lücken, separat erfasst und ausgewertet. Das ergibt eine breitere Informationsbasis und genaue Ergebnisse. Das Schätzen der Modulgröße basiert auf beiden Helligkeitsverteilungen, wobei diverse Varianten möglich sind. Es kann die geeignetere der beiden Häufigkeitsverteilungen ausgesucht und die andere verworfen werden, beide Häufigkeitsverteilungen können ausgewertet und die Ergebnisse verglichen oder kombiniert werden, und im einfachsten Fall können die Häufigkeiten der beiden Häufigkeitsverteilungen aufaddiert werden, um sie damit zu einer einzigen Häufigkeitsverteilung zu kombinieren.

Es wird eine horizontale Häufigkeitsverteilung längs mindestens einer horizontalen Linie und eine vertikale Häufigkeitsverteilung längs mindestens einer vertikalen Linie gebildet. Dies sind zwei andere separate Häufigkeitsverteilungen als die dunkle Häufigkeitsverteilung und die helle Häufigkeitsverteilung. Beide Unterteilungen können kombiniert werden, es gibt dann vier Häufigkeitsverteilungen aus den Kombinationen dunkel und hell sowie horizontal und vertikal. Trotz der Bezeichnung horizontal und vertikal ist die Anforderung an die horizontale Linie und die vertikale Linie zunächst schwächer, sie können schräg und in einem anderen Winkel als senkrecht zueinander verlaufen. Vorzugsweise sind es aber tatsächlich zumindest zueinander senkrechte und noch bevorzugter horizontale und vertikale Linien im geometrischen Sinne, die den Zeilen und Spalten des Pixelraster folgen. Dann ist der Pixelzugriff längs der Linien besonders einfach, und Diskretisierungsartefakte schräger Linien über ein diskretes Gitter werden vermieden.

Im Folgenden werden vielfach weitere auf die Häufigkeitsverteilung bezogene Schritte erläutert. Damit sind dann jeweils je nach Ausführungsform die einzige Häufigkeitsverteilung, mindestens eine, mehrere oder alle gebildeten Häufigkeitsverteilungen gemeint.

Durch Vergleich einer ersten Schätzung der Modulgröße aus der horizontalen Häufigkeitsverteilung und einer zweiten Schätzung der Modulgröße aus der vertikalen Häufigkeitsverteilung wird bevorzugt eine Orientierung des Codes in den Bilddaten bestimmt. Die Orientierung beschreibt den Winkel, indem die Codeelemente und speziell Balken zu dem Pixelraster gedreht sind. Je nach Orientierung scheinen Codeelemente objektiv gleicher Ausdehnung längs der horizontalen Linie und der vertikalen Linie eine unterschiedliche Breite zu besitzen, die beiden horizontal und vertikal geschätzten Modulgrö-βen weichen voneinander ab. Aus dem Unterschied kann die Orientierung rückgerechnet werden. Als Vergleich eignet sich insbesondere das Verhältnis, eine Quotientenbildung, mit Berechnen einer trigonometrischen Funktion davon. Ganz konkret lässt sich die Orientierung als Tangens des Quotienten der längs einer horizontalen Linie bestimmten Modulgröße und der längs einer vertikalen Linie bestimmten Modulgröße berechnen.

Die Modulgröße wird bevorzugt mit einer Orientierung des Codes in den Bilddaten korrigiert. Dafür eignet sich wiederum eine trigonometrische Funktion, insbesondere der Cosinus der Orientierung als Korrekturfaktor. Die Orientierung ist vorzugsweise so bestimmt wie im Vorabsatz beschrieben, die Information über die Orientierung kann aber auch auf beliebige ganz andere Weise gewonnen sein. Da für die Decodierung eines Codes maßgeblich ist, wie viele Pixel in dem konkreten auszuwertenden Grauwertprofil je kleinstem Codeelement zur Verfügung stehen, ist eine Korrektur der Modulgröße nicht zwingend erforderlich. Die relative Modulgröße bezüglich der gewählten Linien kann mehr Aussagekraft für den Decodiererfolg haben als eine korrigierte absolute Modulgröße.

Die mindestens eine Häufigkeitsverteilung wird bevorzugt längs einer Vielzahl zueinander paralleler Linien durch den Code gebildet. Dadurch wird die Statistik der Häufigkeitsverteilung erhöht und somit ein robusteres Ergebnis erzielt, denn jede weitere parallele Linie ermöglicht das Zählen weiterer Pixelfolgen mit Information über dieselbe Modulgröße. Bevorzugt werden eine Vielzahl von oder sogar alle Zeilen beziehungsweise Spalten des Pixelrasters ausgewertet.

Die mindestens eine Häufigkeitsverteilung berücksichtigt vorzugsweise Pixelfolgen einer Anzahl größer einer Höchstschwelle nicht. Mit anderen Worten wird die Häufigkeitsverteilung bei zu langen Pixelfolgen jenseits der Höchstschwelle abgeschnitten, sei es im Rahmen der Auswertung der Häufigkeitsverteilung oder schon bei deren Erzeugung.

Dem liegt die Annahme zugrunde, dass derart lange Pixelfolgen nicht mehr Codeelementen, sondern homogenen Hintergrundflächen entsprechen.

In der mindestens einen Häufigkeitsverteilung werden bevorzugt nur Häufigkeiten oberhalb einer Mindestschwelle berücksichtigt. Damit bleiben nur signifikante Häufigkeiten übrig. Wenn eine bestimmte Länge einer Pixelfolge nur einmal oder wenige Male bis zur Mindestschwelle vorkommt, wird dies als Ausreißer betrachtet und die Häufigkeitsverteilung an dieser Stelle in der weiteren Auswertung nicht mehr beachtet, beispielsweise diese Häufigkeit auf Null gesetzt. Gibt es in der gesamten Häufigkeitsverteilung keine Häufigkeiten oberhalb der Mindestschwelle, so ist hiermit beispielsweise aufgrund starker Unschärfen oder einer Modulgröße weit unter der optischen Auflösung keine sinnvolle Bestimmung der Modulgröße möglich, und die weitere Auswertung kann abgebrochen werden. Möglicherweise verläuft die Linie, längs derer die Häufigkeitsverteilung gebildet wird, parallel zu den Balken eines Barcodes. Es ist denkbar, dass mit einer Häufigkeitsverteilung längs einer anderen Linie mit anderer Orientierung eine Bestimmung der Modulgröße gelingt. Andernfalls befindet sich möglicherweise gar kein Code in den Bilddaten, und selbst wenn doch, ist damit zu rechnen, dass dieser Code nicht lesbar sein wird. Die Entscheidung, ob noch Decodierversuche ohne Bestimmung der Modulgröße unternommen werden, kann aber auch aufgrund anderer Kriterien an anderer Stelle erfolgen.

Die Modulgröße wird bevorzugt aus einer Position eines ersten Maximums in der mindestens einen Häufigkeitsverteilung bestimmt. Die Modulgröße entspricht dem kleinsten Codeelement und damit der ersten Häufung von Pixelfolgen einer kleinsten Länge, d.h. dem ersten Maximum oder Peak. Das Maximum kann auf alle an sich bekannten Weisen lokalisiert werden, beispielsweise über eine Schwelle, einen Funktions- beziehungsweise Parabelfit und dergleichen. Später werden noch besonders bevorzugte Ausführungsformen mit Templatematching beziehungsweise Verfahren des maschinellen Lernens beschrieben. Die so bestimmte Modulgröße ist, wie schon erläutert, noch von der Orientierung der Linie abhängig, über die die Häufigkeitsverteilung gebildet wurde.

Aus der Anzahl und/oder Lage von Maxima in der mindestens einen Häufigkeitsverteilung wird bevorzugt eine Wertigkeit des Codes bestimmt. Die Wertigkeit bezeichnet, über wie viele Modulgrößen sich ein Codeelement maximal erstreckt. Bei einem Barcode der Wertigkeit zwei sind die Balken folglich ein oder zwei Modulgrößen breit. Die Wertigkeit entspricht der Anzahl von Maxima oder Peaks in der Häufigkeitsverteilung. Dabei kann es noch Maxima geben, die durch Störeffekte entstanden sind, beziehungsweise Maxima können zu wenig ausgeprägt sein, um sie als solche zu identifizieren. Deshalb sind Plausibilisierungen denkbar, etwa anhand des erforderlichen gleichmäßigen Abstands. Im Übrigen lässt sich über die weiteren Peaks auch die Modulgröße erneut bestätigen oder korrigieren, da die Peaks untereinander in der Modulgröße beabstandet sind. Falls mehrere Häufigkeitsverteilungen mit dunklen und hellen Pixelfolgen beziehungsweise horizontalen und vertikalen Linien bestimmt sind, ist eine Plausibilisierung über Mehrfachauswertung möglich. Die Wertigkeit des Codes ermöglicht Rückschlüsse über den Codetyp und damit eine Auswahl voraussichtlich geeigneter Decoder.

Die Modulgröße wird bevorzugt durch einen Vergleich der mindestens einen Häufigkeitsverteilung mit Referenzhäufigkeitsverteilungen für verschiedene Klassen von Modulgrö-βen bestimmt. Die Referenzhäufigkeitsverteilungen können als Templates aufgefasst werden, und eine Häufigkeitsverteilung wird durch Template Matching zugeordnet. Beispielsweise gibt es Referenzhäufigkeitsverteilungen für Modulgrößen <1, [1, 1,5[, ..., >5 in beliebigen oder hier vorzugsweise gleichen Schritten von 0,5. Eine feinere Abstufung für kleine und große Modulgrößen ist nicht sinnvoll, weil für Codes mit Modulgrößen unterhalb von eins ohnehin alle denkbaren Verbesserungen aufgeboten werden sollten und umgekehrt Codes mit Modulgrößen oberhalb von fünf recht unproblematisch gelesen werden. Die genannten Zahlenwerte sind sinnvolle Beispiele, aber dennoch nicht so festgeschrieben. Vorzugsweise werden die vorab erzeugten Referenzhäufigkeitsverteilungen und die damit verglichenen jeweils erfassten Häufigkeitsverteilungen normiert. Zum Vergleichen oder Template Matching eignen sich beliebige Korrelationsverfahren, es handelt sich um zwei eindimensionale diskrete Kurvenzüge, für die zahlreiche Ähnlichkeitskriterien an sich bekannt sind. In einer besonders einfachen Ausführungsform wird die jeweilige Differenz zwischen der zu vergleichenden Häufigkeitsverteilung und den verschiedenen Referenzhäufigkeitsverteilungen gebildet. Die Häufigkeitsverteilung wird der Referenzhäufigkeitsverteilung mit der kleinsten Differenz zugeordnet.

Die Modulgröße wird bevorzugt durch Bewerten der mindestens einen Häufigkeitsverteilung mit einem Verfahren des maschinellen Lernens bestimmt, insbesondere mit einem neuronalen Netz. Eine solche Bewertung ist äußerst leistungsfähig und hochflexibel, so dass selbst für herkömmliche Verfahren wie eine Schwellenbewertung ungeeigneten Häufigkeitsverteilungen in vielen Fällen noch die richtige Modulgröße zugeordnet wird. Das neuronale Netz weist bevorzugt versteckte Schichten auf (deep learning). Die Häufigkeitsverteilungen stellen keine allzu komplexen Daten dar, so dass ein kleines neuronales Netz mit ein oder zwei versteckten Schichten ausreichen kann. Für neuronale Netze steht ein riesiger Fundus an nutzbaren Softwarepaketen und bei Bedarf auch dedizierter Hardware zur Verfügung. Das Verfahren des maschinellen Lernens wird vorzugsweise mittels überwachtem Lernen (supervised learning) trainiert. Aus einem Trainingsdatensatz mit Trainingsbeispielen einer vorgegebenen richtigen Bewertung (Annotation, Labeling) wird dann auf später im Betrieb erfasste Bilddaten oder Häufigkeitsverteilungen verallgemeinert.

Das Verfahren wird bevorzugt mit Trainingsbeispielen mit Bilddaten oder Häufigkeitsverteilungen und zugehörigen Modulgrößen eingelernt. Aus diesen Trainingsbeispielen können die Referenzhäufigkeitsverteilungen für ein Template Matching abgeleitet beziehungsweise das Verfahren des maschinellen Lernens oder das neuronale Netz trainiert werden. Vorzugsweise sind Bilder mit lesbaren Codes die Grundlage der Trainingsbeispiele. Aus einem decodierten Code lässt sich retrospektiv die Modulgröße sicher bestimmen. Das ermöglicht es, die Trainingsbeispiele automatisch und verlässlich einer Klasse von Referenzhäufigkeitsverteilungen zuzuordnen beziehungsweise für das überwachte Training eines Verfahrens des maschinellen Lernens zu annotieren. Aus bestehenden Codeleseranwendungen können somit sehr einfach Trainingsbeispiele in großer Zahl beschafft werden. Alternativ oder ergänzend können Bilder mit Codes verschiedenen Codeinhalts und Typs künstlich erzeugt und auch verfremdet werden.

Die Bilddaten werden bevorzugt in einer Vorverarbeitung segmentiert, um einen Bildbereich mit dem Code (ROI, Region of Interest) zu finden. Wie einleitend beschrieben, ist dafür vorzugsweise ein FPGA zuständig. Die Bilddaten können in Bereiche fester Größe oder Kacheln aufgeteilt werden und Kacheln beispielsweise mit hohem Kontrast zu den ROIs zusammengesetzt werden. Die Erzeugung von Häufigkeitsverteilungen kann pro Kacheln erfolgen, und anschließend können Häufigkeitsverteilungen mehrerer Kacheln aufaddiert werden. Vorzugsweise erfolgt nur der letzte Schritt in einem Mikroprozessor, der somit für die Bestimmung der Modulgröße nur noch auf vom FPGA gelieferte Metadaten, nämlich die Häufigkeitsverteilungen zu den einzelnen Kacheln, und nicht mehr auf die ursprünglichen Bilddaten zugreifen muss.

Die Bilddaten werden vorzugsweise binarisiert. Damit ist eine eindeutige Entscheidung über dunkel und hell schon vorab dem Bilden von Häufigkeitsverteilungen getroffen. Die Binarisierung bleibt vorzugsweise auf ROIs beschränkt und kann bereits auf dem FPGA erfolgen.

Vorzugsweise wird der optische Code nach dem Bestimmen der Modulgröße gelesen. Das Bestimmen der Modulgröße ist also ein früher Schritt in der Bildverarbeitung zum Lesen des Codes und kann nicht auf die Ergebnisse der Decodierung zurückgreifen. Für ein Bestimmen der Modulgröße nach dem Decodieren stünden auch wie einleitend beschrieben sehr genaue herkömmliche Alternativverfahren zur Verfügung. Eine nachträglich bestimmte Modulgröße könnte aber naturgemäß nicht das Decodieren unterstützen.

Vorzugsweise wird der optische Code mit einem anhand der Modulgröße ausgewählten und/oder durch die Modulgröße parametrierten Decodierverfahren gelesen. Die Modulgröße ist also ein Parameter, der beim Decodieren und womöglich schon für weitere vorbereitende Schritte wie eine Feinsegmentierung der Codebereiche zur Verfügung steht. Das Decodieren und möglicherweise die Segmentierung, insbesondere eine Feinsegmentierung, werden durch die Vorabkenntnis der Modulgröße unterstützt, vereinfacht, beschleunigt, verbessert oder überhaupt erst ermöglicht. Ein Beispiel ist Superresolution, also das Erzeugen von Bilddaten höherer Auflösung aus mehreren Sätzen von Bilddaten niedrigerer Auflösung. Die Modulgröße kann der Hinweis darauf sein, für welche Codes Superresolution überhaupt gebraucht wird. Zudem ist die Modulgröße auch ein sehr hilfreicher Parameter für einen Superresolution-Algorithmus. Andererseits ist auch denkbar, die erfindungsgemäße Bestimmung der Modulgröße erst im Anschluss an einen Superresolution-Algorithmus durchzuführen, wobei dann für eine absolute Modulgröße der Skalierungsfaktor zu berücksichtigen ist. Ein weiteres Beispiel des Einflusses der Modulgröße auf das Decodieren ist die Erkenntnis, dass ein Decodieren gar nicht möglich sein wird, weil die Modulgröße für die vorhandenen Decodierverfahren zu klein ist. Derzeit liegt eine praktische Grenze für Barcodes bei 0,6 ppm. Es spart dann Ressourcen, den Code direkt anhand der Modulgröße als unlesbar zu klassifizieren, statt erst noch aufwändig diverse komplexe Decodierverfahren daran scheitern zu lassen.

Die Modulgröße wird bevorzugt nur binär als kleine oder größere Modulgröße bestimmt, wobei insbesondere eine kleine Modulgröße unterhalb von zwei oder unterhalb eins liegt und eine größere Modulgröße entsprechend mindestens zwei oder mindestens eins beträgt. Wie immer in dieser Beschreibung werden Modulgrößen in der Einheit ppm (Pixel per Module) gemessen. In diesem Zusammenhang ist größere Modulgröße nicht als vage Zahlenangabe, sondern binäres Gegenteil "nicht kleine" Modulgröße zu verstehen. Die kleine Modulgröße kann das beste Ergebnis sein, dass das erfindungsgemäße Verfahren zu leisten imstande ist, weil die Qualität der Bilddaten und Häufigkeitsverteilungen keine quantitative Bestimmung zulässt. Andererseits ist auch möglich, eine quantitativ bestimmte Modulgröße durch Vergleich mit einem Grenzwert in klein oder größer zu wandeln. Kleine Modulgrößen sind für den Decoder besonders fordernd, beispielsweise wird nur dafür ein aufwändiger Superresolution-Algorithmus angewandt. Es kann auch eine harte Grenze wie 0,6 ppm gesetzt sein und dann für kleine Modulgrößen ohne Decodierversuch direkt ein Lesefehler ausgegeben werden.

Der erfindungsgemäße Codeleser zum Lesen von optischen Codes kann ein Barcodescanner sein, beispielsweise mit einer Photodiode als Lichtempfangselement. Vorzugsweise handelt es sich um einen kamerabasierten Codeleser mit einem Bildsensor als Lichtempfangselement. Der Bildsensor wiederum kann ein Zeilensensor zur Erfassung einer Codezeile oder eines flächigen Codebildes durch Zusammensetzen von Bildzeilen oder ein Matrixsensor sein, wobei auch Aufnahmen eines Matrixsensors zu einem größeren Ausgangsbild zusammengefügt sein können. Ein Verbund mehrerer Codeleser oder Kameraköpfe ist ebenfalls denkbar. Eine Steuer- und Auswertungseinheit kann selbst Teil eines Barcodescanners oder eines kamerabasierten Codelesers oder als Steuerungsgerät daran angeschlossen sein. Darin ist ein erfindungsgemäßes Verfahren zum Bestimmen der Modulgröße eines optischen Codes und einem vorzugsweise sich daran anschließenden Lesen des Codes unter Ausnutzung der nun bekannten Modulgröße implementiert.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:

Fig. 1      eine schematische dreidimensionale Übersichtsdarstellung der beispielhaften Montage eines Codelesers über einem Förderband, auf dem Objekte mit zu lesenden Codes gefördert werden;

Fig. 2      eine schematische Darstellung einer heterogenen Architektur zur Vorverarbeitung mit einem FPGA und einer CPU zur weiteren Verarbeitung beziehungsweise als Decoder;

Fig. 3      ein Beispielbild mit optischen Codes, einer Unterteilung in Kacheln und einem interessierenden Bereich mit einem optischen Code;

Fig. 4a      eine beispielhafte Kachel mit einem Ausschnitt eines Codes;

Fig. 4b      den Ausschnitt eines Codes gemäß Figur 4a nach einer Binarisierung;

Fig. 5a      ein Histogramm mit Häufigkeiten von horizontalen hellen und dunklen Pixelfolgen unterschiedlicher Längen in dem Ausschnitt der Figur 4b;

Fig. 5b      ein Histogramm mit Häufigkeiten von vertikalen hellen und dunklen Pixelfolgen unterschiedlicher Längen in dem Ausschnitt der Figur 4b;

Fig. 6a      eine beispielhafte Kachel mit einem Ausschnitt eines weiteren, kleinen und unscharf aufgenommenen Codes;

Fig. 6b      den Ausschnitt eines Codes gemäß Figur 6a nach einer Binarisierung;

Fig. 7a      ein Histogramm mit Häufigkeiten von horizontalen hellen und dunklen Pixelfolgen unterschiedlicher Längen in dem Ausschnitt der Figur 6b;

Fig. 7b      ein Histogramm mit Häufigkeiten von vertikalen hellen und dunklen Pixelfolgen unterschiedlicher Längen in dem Ausschnitt der Figur 6b;

Fig. 8a      eine beispielhafte Kachel mit einem Ausschnitt eines weiteren Codes;

Fig. 8b      den Ausschnitt eines Codes gemäß Figur 8a nach einer Binarisierung;

Fig. 9a      ein Histogramm mit Häufigkeiten von horizontalen hellen und dunklen Pixelfolgen unterschiedlicher Längen in dem Ausschnitt der Figur 8b;

Fig. 9b      ein Histogramm mit Häufigkeiten von vertikalen hellen und dunklen Pixelfolgen unterschiedlicher Längen in dem Ausschnitt der Figur 8b;

Fig. 10a      ein Histogramm mit Häufigkeiten von horizontalen hellen und dunklen Pixelfolgen unterschiedlicher Längen für ein weiteres, nicht gezeigtes Codebeispiel mit Modulgröße 2,31 ppm;

Fig. 10b      ein Histogramm mit Häufigkeiten von vertikalen hellen und dunklen Pixelfolgen unterschiedlicher Längen für das Codebeispiel der Figur 10a;

Fig. 11a      ein Histogramm mit Häufigkeiten von horizontalen hellen und dunklen Pixelfolgen unterschiedlicher Längen für ein weiteres, nicht gezeigtes Codebeispiel mit Modulgröße 0,82 ppm;

Fig. 11b      ein Histogramm mit Häufigkeiten von vertikalen hellen und dunklen Pixelfolgen unterschiedlicher Längen für das Codebeispiel der Figur 11a;

Fig. 12a      eine beispielhafte Wahrheitsmatrix für die geschätzte Modulgröße mittels Template Matching anhand von hellen Pixelfolgen;

Fig. 12b      eine beispielhafte Wahrheitsmatrix für die geschätzte Modulgröße mittels Template Matching anhand von dunklen Pixelfolgen;

Fig. 13a      ein Vergleich zwischen Vorgabe (ground truth) und Vorhersage eines neuronalen Netzes für die Modulgröße;

Fig. 13b      ein Vergleich ähnlich Figur 13a für ein neuronales Netz mit weniger Neuronen in den versteckten Schichten;

Fig. 14a      eine beispielhafte Vorhersage des Codetyps durch ein neuronales Netz; und

Fig. 14b      ein Vergleich zwischen Vorgabe (ground truth) und Vorhersage des neuronalen Netzes gemäß Figur 14a.

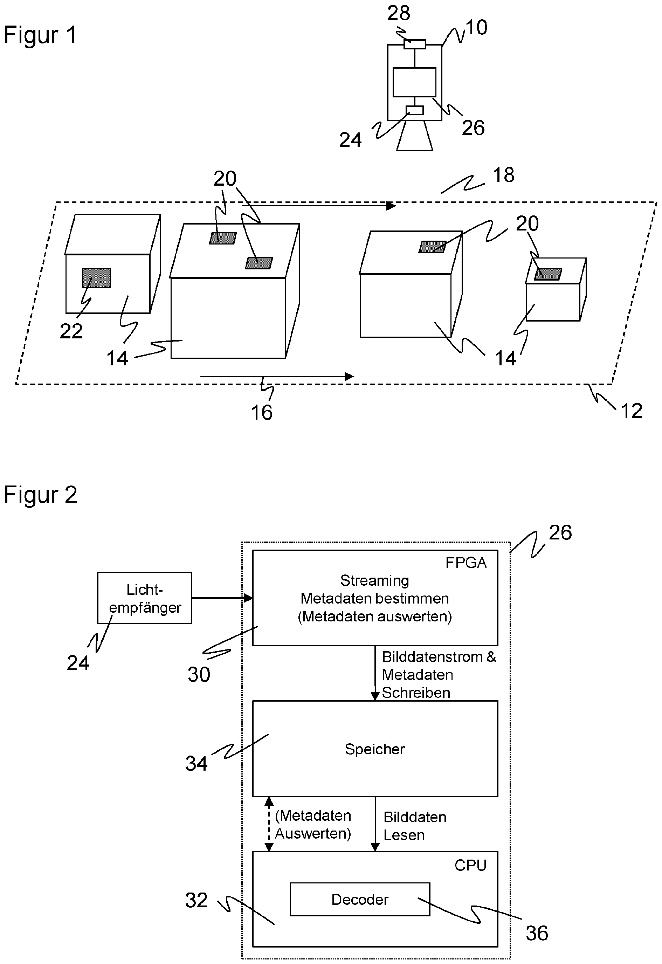

Figur 1 zeigt einen optoelektronischen Codeleser 10 in einer bevorzugten Anwendungssituation montiert über einem Förderband 12, welches Objekte 14, wie durch den Pfeil 16 angedeutet, durch den Erfassungsbereich 18 des Codelesers 10 fördert. Die Objekte 14 tragen an ihren Außenflächen Codebereiche 20, die von dem Codeleser 10 erfasst und ausgewertet werden. Diese Codebereiche 20 können von dem Codeleser 10 nur dann erkannt werden, wenn sie auf der Oberseite oder zumindest von oben sichtbar angebracht sind. Daher kann abweichend von der Darstellung in Figur 1 zum Lesen eines etwa seitlich oder unten angebrachten Codes 22 eine Mehrzahl von Codelesern 10 aus verschiedenen Richtungen montiert sein, um eine sogenannte Omnilesung aus allen Richtungen zu ermöglichen. Die Anordnung der mehreren Codeleser 10 zu einem Lesesystem erfolgt in der Praxis meist als Lesetunnel. Diese stationäre Anwendung des Codelesers 10 an einem Förderband ist in der Praxis sehr häufig. Die Erfindung bezieht sich aber zunächst auf den Codeleser 10 selbst beziehungsweise das darin implementierte Verfahren zum Bestimmen einer Modulgröße vorzugsweise mit anschließendem Decodieren von Codes, so dass dieses Beispiel nicht einschränkend verstanden werden darf.

Der Codeleser 10 erfasst mit einem Lichtempfangselement 24 Bilddaten der geförderten Objekte 14 und der Codebereiche 20, die von einer Steuer- und Auswertungseinheit 26 mittels Bildauswertung und Decodierverfahren weiterverarbeitet werden. Es kommt für die Erfindung nicht auf das konkrete Bildgebungsverfahren an, so dass der Codeleser 10 nach irgendeinem an sich bekannten Prinzip aufgebaut sein kann. Beispielsweise wird jeweils nur eine Zeile erfasst, sei es mittels zeilenförmigem Bildsensor oder einem Scanverfahren, wobei im letztgenannten Fall als Lichtempfangselement 24 eine Photodiode ausreicht. Es kann direkt versucht werden, aus einer Bildzeile den Code zu lesen, oder die Steuer- und Auswertungseinheit 26 fügt die im Laufe der Förderbewegung erfassten Zeilen zu den Bilddaten zusammen. Mit einem matrixförmigen Bildsensor lässt sich schon in einer Aufnahme ein größerer Bereich erfassen, wobei auch hier das Zusammenfügen von Aufnahmen sowohl in Förderrichtung als auch quer dazu möglich ist. Die mehreren Aufnahmen werden nacheinander und/oder von mehreren Codelesern 10 aufgenommen, die beispielsweise mit ihren Erfassungsbereichen 18 nur gemeinsam die gesamte Breite des Förderbands 12 abdecken, wobei jeder Codeleser 10 gleichsam nur eine Kachel des Gesamtbildes aufnimmt und die Kacheln durch Bildverarbeitung (Stitching) zusammengefügt werden. Auch ein nur fragmenthaftes Decodieren innerhalb einzelner Kacheln mit anschließendem Zusammenfügen der Codefragmente ist denkbar.

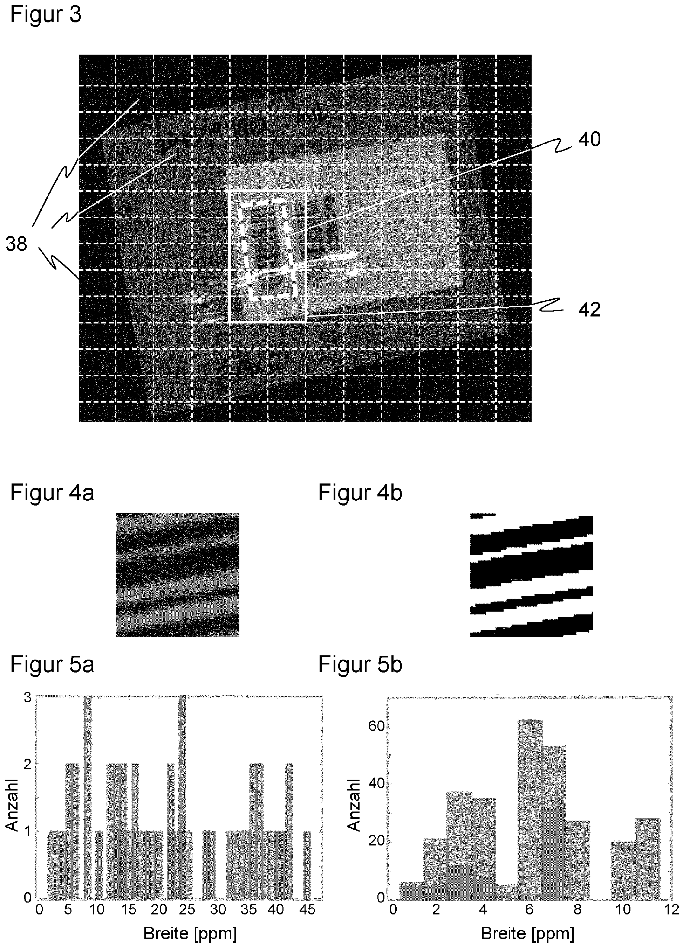

Hauptaufgabe des Codelesers 10 ist, die Codebereiche 20 zu erkennen und die dort angebrachten Codes auszulesen. Als ein Teilschritt, vorzugsweise möglichst früh in der Verarbeitungskette und noch vor dem eigentlichen Codelesen, wird die Modulgröße des jeweiligen Codes 20 bestimmt. Dies wird weiter unten anhand der Figuren 4a bis 14b im Detail erläutert.

Über eine Schnittstelle 28 gibt der Codeleser 10 Informationen aus, wie gelesene Codes oder Bilddaten. Es ist auch denkbar, dass die Steuer- und Auswertungseinheit 26 nicht in dem eigentlichen Codeleser 10, also der in Figur 1 gezeigten Kamera angeordnet ist, sondern als eigenes Steuerungsgerät an einen oder mehrere Codeleser 10 angeschlossen wird. Dann dient die Schnittstelle 28 auch als Verbindung zwischen interner und externer Steuerung und Auswertung. Die Steuer- und Auswertungsfunktionalität kann praktisch beliebig auf interne und externe Bausteine verteilt werden, wobei die externen Bausteine auch über Netzwerk oder Cloud angeschlossen sein können. Das alles wird hier nicht weiter unterschieden und die Steuer- und Auswertungseinheit 26 unabhängig von der konkreten Implementierung als Teil des Codelesers 10 aufgefasst.

Figur 2 zeigt die Steuer- und Auswertungseinheit 26 und ihre Anbindung in einer schematischen Darstellung. Diese Darstellung zeigt eine vorteilhafte Ausführungsform, allgemein kann eine Steuer- und Auswertungseinheit 26 beliebiger interner Struktur die Bilddaten des Lichtempfangselements 24 auslesen und in der noch zu beschreibenden Weise verarbeiten. Die Steuer- und Auswertungseinheit 26 in der bevorzugten Ausführungsform gemäß Figur 2 umfasst eine erste Verarbeitungseinheit 30, und eine zweite Verarbeitungseinheit 32. Die zweite Verarbeitungseinheit 32 weist vorzugsweise einen Decoder 36 zum Auslesen von optischen Codes anhand von Bilddaten auf. Die erste Verarbeitungseinheit 30 wird im Folgenden am Beispiel eines FPGA (Field Programmable Gate Array), die zweite Verarbeitungseinheit 32 am Beispiel eines Mikroprozessors oder einer CPU (Central Processing Unit) erläutert. Andere und zusätzliche Digitalbausteine, einschließlich einer Ausführungsform mit nur einem einzigen Auswertungsbaustein der Steuer- und Auswertungseinheit 26, sind ebenfalls möglich, einschließlich DSPs (Digital Signal Processor), ASIC (Application-Specific Integrated Circuit), KI-Prozessor, NPU (Neural Processing Unit), GPU (Graphics Processing Unit) oder dergleichen.

Die erste Verarbeitungseinheit 30 ist einerseits mit dem Lichtempfangselement 24 verbunden und weist andererseits eine Schnittstelle in Richtung der zweiten Verarbeitungseinheit 32 auf, vorzugsweise eine Hochgeschwindigkeitsschnittstelle (PCI, PCIE, MIPI). Beide Verarbeitungseinheiten 30, 32 können auf einen Speicher 34 für Bilddaten und Zusatzinformationen, Metadaten oder Verarbeitungsergebnisse zugreifen. Die entsprechenden Lese- und Schreibvorgänge erfolgen vorzugsweise mittels DMA (Direct Memory Access). Der Speicher 34 lässt sich mindestens funktional, je nach Ausführungsform auch strukturell als Teil der zweiten Verarbeitungseinheit 32 auffassen.

Im Betrieb nimmt nun das Lichtempfangselement 24 jeweils ein neues Bild oder einen neuen Bildabschnitt auf. Das kann ein rechteckiges Bild eines Matrixsensors sein, es sind aber auch einzelne oder mehrere Bildzeilen eines Zeilensensors vorstellbar, die dann sukzessive im Verlauf der Relativbewegung zwischen Codeleser 10 und Objekt 14 ein Gesamtbild ergeben. Die Bilddaten des Lichtempfangselements 24 werden von der ersten Verarbeitungseinheit 30 ausgelesen und in den Speicher 34 übertragen oder gestreamt. Dabei werden vorzugsweise zugleich Zusatzinformationen oder Metadaten bestimmt, und zwar vorteilhafterweise "on-the-fly", d.h. direkt beim Übertragen in den Speicher 34 und noch während weitere Bilddaten des Bildes von dem Lichtempfangselement 24 einzulesen sind beziehungsweise eingelesen werden. Die Metadaten können verschiedene Vorverarbeitungen betreffen, die hier nicht näher beschrieben werden. Denn im Zusammenhang mit der Erfindung ist insbesondere Bestimmen von Häufigkeitsverteilungen heller oder dunkler Pixelfolgen verschiedener Längen in Vorbereitung der Bestimmung einer Modulgröße und möglicherweise das Unterteilen eines Bildes in Kacheln und Auffinden interessierender Bereiche eines Bildes beispielsweise mit Codes 20 von Interesse. Letzteres wird später unter Bezugnahme auf die Figur 3 erläutert.

Die zweite Verarbeitungseinheit 32 greift auf die Bilddaten in dem Speicher 34 zu, um sie weiter zu verarbeiten. Besonders bevorzugt liest ein Decoder 36 der zweiten Verarbeitungseinheit 32 den Inhalt der mit den Bilddaten aufgenommenen optischen Codes 20 aus. Die zweite Verarbeitungseinheit 32 ist zudem in der Lage, von der ersten Verarbeitungseinheit 30 in dem Speicher 34 abgelegte Metadaten auszuwerten. Die Auswertung von Metadaten kann zumindest teilweise bereits in der ersten Verarbeitungseinheit 30 erfolgen, aus diesem Grund der verschiedenen möglichen Aufgabenverteilungen ist dieser Verarbeitungsschritt in Figur 2 jeweils eingeklammert.

Figur 3 zeigt ein Beispielbild mit optischen Codes, wie es von dem Codeleser 10 aufgenommen wird. Das Bild wird in horizontaler und vertikaler Richtung in eine Vielzahl von Kacheln 38 unterteilt, vorzugsweise wie dargestellt in einem gleichmäßigen Raster. Zu jeder Kachel 38 können Metadaten bestimmt werden, beispielsweise Mittelwert oder Varianz, anhand derer beurteilt werden kann, ob die jeweilige Kachel 38 eine interessante Struktur wie einen optischen Code enthält. Für die erfindungsgemäße Bestimmung der Modulgröße wird zu den Kacheln 38 mindestens eine jeweilige Häufigkeitsverteilung bestimmt, insbesondere in Form eines Histogramms, das die möglichen Längen von hellen beziehungsweise dunklen Pixelfolgen in seinen Bins repräsentiert und darin zählt, wie oft eine Pixelfolge dieser Länge in einer Kachel 38 vorkommt. Wie zu Figur 2 erläutert, sind solche Verarbeitungsschritte on-the-fly während des Streamens möglich.

Ein interessierender Bereich 40 mit einem optischen Code wird anhand von Metadaten und/oder weiteren Informationen bestimmt, wie Geometrievermessungen eines zusätzlichen Sensors. Die Suche nach interessierenden Bereichen 40 kann die im Vorabsatz angesprochenen Metadaten nutzen, es sind aber auch andere Segmentierungen bekannt. Es hängt von dem Bild ab, ob es einen oder mehrere solcher interessierender Bereiche 40 oder womöglich gar keinen interessierenden Bereich 40 gibt, etwa weil das Bild keine optischen Codes enthält. In dem Beispielbild von Figur 3 sind noch weitere optische Codes erkennbar, die der Übersichtlichkeit halber nicht gekennzeichnet sind. Eine Teilmenge 42 der Kacheln 38 entspricht dem interessierenden Bereich 40. Dabei wird am Rand beispielsweise anhand eines Überlappungsanteils entschieden, ob die Kachel 38 noch zu der Teilmenge 42 gehört oder nicht. Das weitere Verfahren kann sich auf diese Teilmenge von Kacheln 38, auf den unabhängig von Kacheln 38 bestimmten interessierenden Bereich 40 oder einen sonstigen Ausschnitt mit dem optischen Code beziehen.

Figur 4a zeigt eine beispielhafte Kachel mit einem Ausschnitt eines Codes. Sie besteht beispielsweise aus 24x24 Pixeln. Mittels Superresolution-Algorithmen kann optional die ursprüngliche Auflösung auf beispielsweise 48x48 Pixel erhöht werden. Figur 4b zeigt denselben Ausschnitt nach einer Binarisierung, d.h. als Schwarzweißbild mit nur ein Bit Farbtiefe statt des ursprünglichen Grauwertbildes mit beispielsweise acht Bit Farbtiefe.

Für die Bestimmung der Modulgröße wird aus einer solchen Kachel, alternativ einem anderen Bildausschnitt mit zumindest Teilen des Codes, ein Histogramm als diskrete Realisierung einer Häufigkeitsverteilung gebildet, das zählt, wie oft es helle oder dunkle Pixelfolgen einer bestimmten Länge gibt. Solche Pixelfolgen können sich im Prinzip in beliebiger Richtung erstrecken, d.h. einer Linie beliebiger Richtung durch den Code folgen. Besonders einfach und ohne Diskretisierungsartefakte sind Pixelfolgen längs horizontaler oder vertikaler Richtung auszuwerten, d.h. Zeilen oder Spalten der Kachel. Für eine bessere Statistik sollten alle Zeilen und Spalten einfließen, eine Teilauswahl ist aber auch möglich.

Die Figuren 5a-b zeigen ein solches zu Figur 4b gehöriges Histogramm mit horizontalen beziehungsweise vertikalen Pixelfolgen. Die Bins stehen für die Länge einer Pixelfolge, der Count eines jeden Bins für die Anzahl, wie oft diese Länge vorkommt. Dabei sind jeweils in hellem Grau die Anzahlen oder Häufigkeiten der hellen Pixelfolgen und in dunklem Grau der dunklen Pixelfolgen dargestellt, somit jeweils zwei Histogramme überlagert und in den Figuren 5a-b insgesamt vier Histogramme für die möglichen Kombinationen aus horizontal und vertikal sowie hell und dunkel gezeigt. Diese Art der komprimierten Darstellung wird in den weiteren Figuren mit Histogrammen beibehalten. Eine helle, horizontale Pixelfolge der Länge zwei würde demnach im zweiten Bin der linken Figur 5a in dunklem Grau gezählt.

Im diskutierten Beispiel ist der Code mit seinen Balken nahezu horizontal orientiert. Das Histogramm der Figur 5a, das Pixelfolgen in horizontaler Richtung zählt, ist daher nicht sinnvoll auswertbar. Das Histogramm der Figur 5b hingegen zeigt klare Maxima und keinerlei überlange, für einen optischen Code unplausible Pixelfolgen. Hieraus lässt sich verlässlich eine Modulgröße von drei bis vier ablesen, nämlich zum einen aus der Lage des ersten Maximums oder Peaks, ebenso aus dem Abstand zwischen den Peaks, wobei diese Kriterien einander stützen und plausibilisieren können. Dies gelingt nicht nur mit dem bloßen Auge, sondern ebenso algorithmisch beispielsweise mit einer Schwellenbewertung oder einem Funktionsfit. Wenn das Ausgangsbild heraufskaliert wurde wie im Beispiel (Superresolution, Upsampling), kann die Modulgröße um den Skalierungsfaktor korrigiert werden und beträgt demnach 1,5-2,0 ppm. Zusätzlich zu der Modulgröße kann sogar noch die Wertigkeit des Codes abgelesen werden, die in diesem Beispiel drei beträgt, weil es drei Peaks gibt.

Um zu entscheiden, welches Histogramm ausgewertet wird, können verschiedene Kriterien angewandt werden. Beispielsweise können große Längen von Pixelfolgen oberhalb einer Maximalschwelle abgeschnitten oder die entsprechenden Bins auf Null gesetzt werden. Dadurch würden im Histogramm der Figur 5a die überlangen Pixelfolgen beispielsweise jenseits von zwölf eliminiert. Das in ungünstige Richtung erzeugte Histogramm enthält damit viel weniger Ereignisse als das andere und lässt sich daran erkennen. Auch ein Histogramm mit uninteressanten homogenen Flächen würde auf diese Weise herausgefiltert. Als weiteres Kriterium können Häufigkeiten unterhalb einer Mindestschwelle auf Null gesetzt werden. Die Länge einer Pixelfolge entsprechend der Modulgröße sollte sehr oft vorkommen. Einzelne Ereignisse wie in Figur 5a dagegen sind Ausreißer oder einer ungünstigen Orientierung beziehungsweise einem fehlenden Code im ausgewerteten Bildabschnitt geschuldet. Mit diesem Kriterium würde in dem Histogramm der Figur 5a nichts übrig bleiben, so dass klar ist, dass stattdessen das Histogramm der Figur 5b weiter zu verarbeiten ist. Die Maximalschwelle und die Mindestschwelle sollten relativ zur Größe des ausgewerteten Bildausschnitts gesetzt sein.

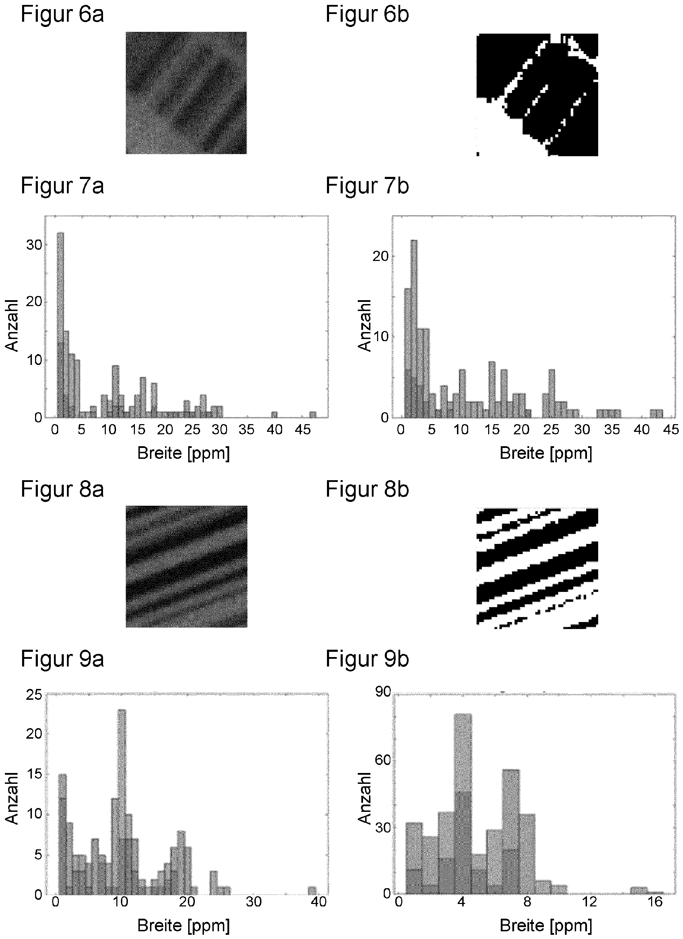

Die Figuren 6a-b und 7a-b zeigen analog den Figuren 4a-b und 5a-b eine andere beispielhafte Kachel mit einem Ausschnitt eines Codes, die zugehörige Binarisierung und daraus gewonnene Histogramme in horizontaler und vertikaler Richtung. Dies ist ein Negativbeispiel mit einem sehr kleinen, verwaschenen Code, der außerdem keine ganze Kachel ausfüllt. Hier gibt es kein aussagekräftiges Ergebnis. Insbesondere werden die oben diskutierten Kriterien beide Histogramme aussortieren. Immerhin lässt sich noch schließen, dass es sich um kleine Strukturen handelt. Das allein kann für den nachgelagerten Dekoder 36 schon wertvoll sein, der deshalb seine Mittel zur Aufbereitung kleiner Codes einsetzen sollte. Ob es damit gelingt, in der extrem schlechten Aufnahme, die der Figur 6a zugrunde liegt, noch einen Code zu lesen, steht auf einem anderen Blatt, jedenfalls besteht in Grenzfällen noch die Chance dafür.

Die Figuren 8a-b und 9a-b zeigen analog den Figuren 4a-b und 5a-b eine andere beispielhafte Kachel mit einem Ausschnitt eines Codes, die zugehörige Binarisierung und daraus gewonnene Histogramme in horizontaler und vertikaler Richtung. Dieser Code ist wieder besser auswertbar. Wie schon im Beispiel der Figur 4a könnte optional vor der Binarisierung eine Kontrastspreizung vorgenommen werden, da die tatsächlichen Grauwerte die möglichen Grauwerte bei Weitem nicht ausnutzen.

In diesem Beispiel ist der Code schräg orientiert, und beide Histogramme aus Linien horizontaler Orientierung und vertikaler Orientierung ermöglichen die weitere Auswertung. Das Histogramm der Figur 9a zeigt Peaks bei 1, 10 und 19, das Histogramm der Figur 9b bei 4 und 7. Der Peak bei 1 ist zu verwerfen, denn zwar könnte dieser Peak prinzipiell eine Modulbreite eins anzeigen, aber mit den Abständen zu den übrigen Peaks ist das unplausibel. Es ergibt sich somit in horizontaler Richtung eine Modulgröße von 9-10 und in vertikaler Richtung eine Modulgröße von 3-4. Die unterschiedlichen Ergebnisse sind kein Fehler, denn die Länge der Pixelfolgen unterscheidet sich tatsächlich je nach Orientierung der Linien, längs derer sie bestimmt werden. Der nachgelagerte Decoder kann mit den unbereinigten Modulgrößen arbeiten, je nachdem, wie die Grauwertprofile orientiert sind, mit denen der Decoder zu lesen versucht.

Es besteht zudem die Möglichkeit, die Orientierung des Codes innerhalb der Kachel beziehungsweise des Bildausschnitts oder dessen Pixelrasters aus den unterschiedlichen Modulgrößen in horizontaler und vertikaler Richtung zu ermitteln. Wenn diese Orientierung über ihren Winkel $\alpha$ gegen die Horizontale definiert wird, die absolute oder korrigierte Modulgröße als ModSize, und die horizontal beziehungsweise vertikal gemessenen Modulgrößen als $ModSize_{hor}$ und $ModSize_{Vert}$ bezeichnet werden, so gilt

$$ModSize = \cos(\alpha) * ModSize_{Vert}$$

$$ModSize = \sin(\alpha) * ModSize_{hor}$$

$$\tan(\alpha) = ModSize_{Vert} / ModSize_{hor}$$

Aus der dritten Gleichung kann die Orientierung und mit dieser Orientierung aus der ersten oder zweiten Gleichung die korrigierte Modulgröße bestimmt werden. Es ist optional denkbar, den Code nun anhand der Orientierung mit dem Pixelraster auszurichten, sofern dafür in Kauf genommen wird, die Bilddaten ein weiteres Mal auszulesen.

Damit sind einige Beispiele vorgestellt, wie die Modulgröße, gegebenenfalls auch die Wertigkeit und Orientierung, aus Häufigkeitsverteilungen oder Histogrammen über Längen von Pixelfolgen bestimmt werden können. Vorzugsweise berechnet die erste Verarbeitungseinheit 30 pro Kachel 38 die Histogramme und gibt sie als Metadaten über den Speicher 34 an die zweite Verarbeitungseinheit 32 weiter. Durch eine parallele oder anderweitig durchgeführte Segmentierung werden die interessierenden Bereiche 40 bestimmt, so dass anschließend diejenige Teilmenge 42 der Kacheln 38 aufgefunden werden kann, die einem interessierenden Bereich 40 entspricht. Die Histogramme zu den Kacheln 38 können dann über die Teilmenge 42 zu Histogrammen zu dem interessierenden Bereich 40 aufaddiert werden.

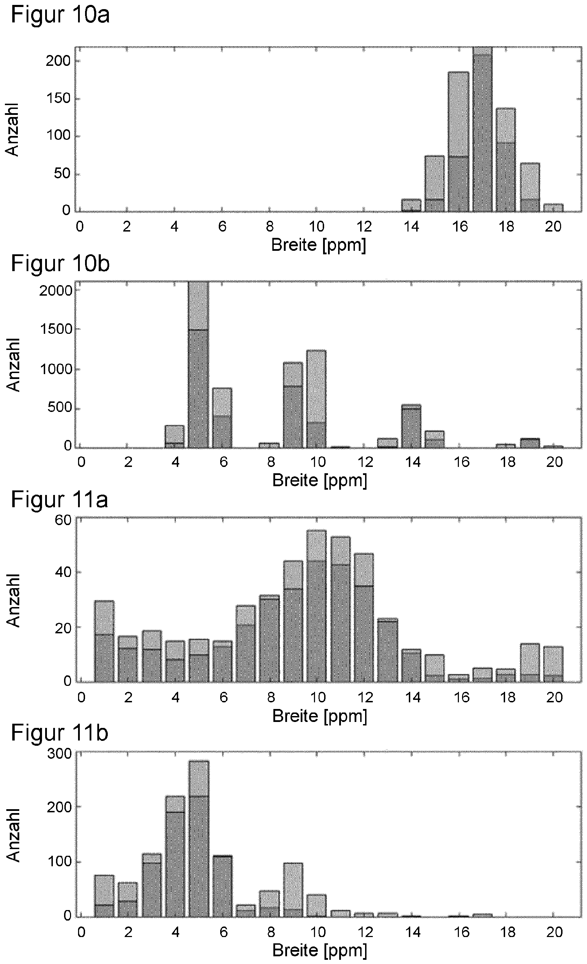

Die Figuren 10a-b und 11a-b zeigen, dieses Mal ohne Darstellung eines zugrundeliegenden Ausgangsbildes, weitere horizontale und vertikale Histogramme für eine Modulgröße von 2,31 beziehungsweise 0,82. Aus den Histogrammen der Figur 10ab lässt sich die Modulgröße und sogar Wertigkeit robust anhand der Peaks ermitteln. Die Orientierung des Codes ist hier jedenfalls weitgehend vertikal, aus dem zugehörigen unteren Histogramm der Figur 10b ist eine Lage des ersten Peaks bei 5 abzulesen. Wegen einer Auflösungserhöhung mit Faktor zwei beträgt daher die geschätzte Modulgröße 2,5 in guter Übereinstimmung mit der tatsächlichen Modulgröße 2,31.

In den Histogrammen der Figuren 11a-b zu der kleinen Modulgröße von 0,82 sind ebenfalls klare Peaks zu erkennen. Hier würde aber die aus dem Histogramm gemäß Figur 11b abgelesene Modulgröße von 5 oder reskaliert 2,5 in die Irre führen. Diese Art breiter Peaks im Anfangsbereich ist für eine direkte Bestimmung der Modulgröße wie im Vorabsatz beispielsweise durch Selektion von Peaks mittels Schwellenbewertung nicht geeignet.

In bevorzugten Ausführungsformen werden daher mächtigere Auswertungen eingesetzt, um auch einem Fall wie demjenigen der Figur 11a-b gerecht zu werden. In zwei Beispielen wird zunächst ein Template Matching und dann ein neuronales Netz als Vertreter eines Verfahrens des maschinellen Lernens vorgestellt.

Für eine Ausführungsform mit Template Matching werden Templates oder Referenzhistogramme beziehungsweise Referenzhäufigkeitsverteilungen benötigt. Dazu werden Trainingsbeispiele für verschiedene Modulgrößen und vorzugsweise auch verschiedene Codetypen gesammelt. Das können echte Bilder von Codes aus einer beliebigen Codeleseanwendung und ergänzend oder alternativ aus einem Codeinhalt generierte, gegebenenfalls verfremdete oder ausgedruckte und wieder gelesene künstliche Bilder von Codes sein. Ist der Codeinhalt durch erfolgreiches Lesen bekannt, so lässt sich die Modulgröße im Nachhinein sehr gut bestimmen. Die Trainingsbeispiele können also in Klassen von Modulgrößen sortiert werden, beispielsweise [1, 1,5], [1,5, 2], ... und gegebenenfalls noch getrennt nach Codetyp. Je Klasse werden nun Histogramme über die Trainingsbeispiele der Klasse gebildet. Werden nun jeweils die Counts in den Bins der Histogramme einer Klasse aufaddiert, und wird dies bevorzugt noch auf eine Gesamtsumme von eins normiert, so ist damit das Template für diese Klasse gefunden.

Im Betrieb wird ein jeweils zu dem aktuellen Code erfasstes Histogramm vorzugsweise zunächst normiert. Dann wird die Differenz zwischen diesem Histogramm und den verschiedenen Referenzhistogrammen gebildet. Diese Differenz ist ein Korrelations- oder Ähnlichkeitsmaß, genaugenommen das Inverse, nämlich ein Maß für die Abweichung oder den Fehler. Das Histogramm und damit der aktuelle Code wird dem Referenzhistogramm mit dem kleinsten Fehler zugeordnet. Die geschätzte Modulgröße ist diejenige der zugeordneten Klasse.

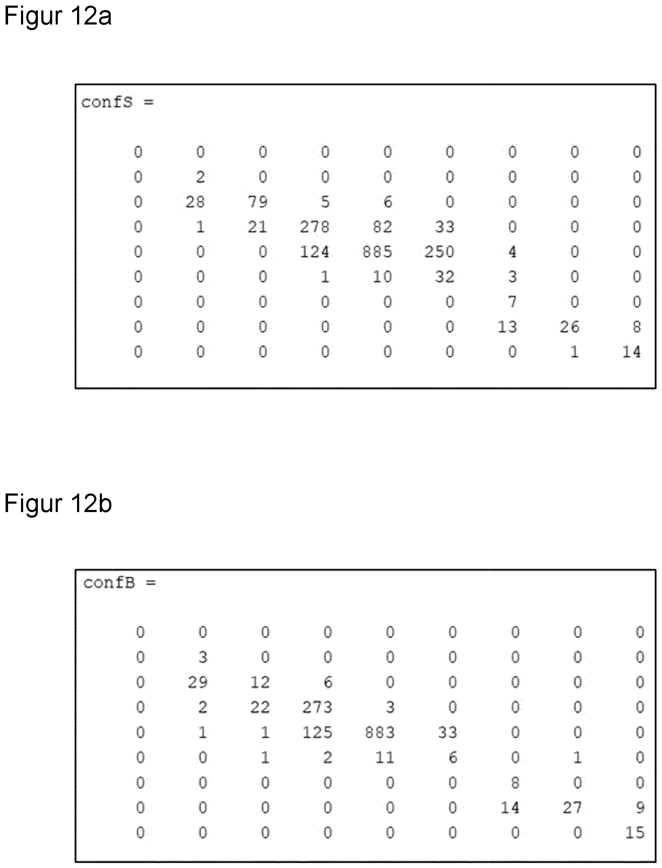

Die Figuren 12a-b zeigen Wahrheitsmatrizen (confusion matrix) eines Template Matchings einmal für dunkle und einmal für helle Codeelemente bei Auswertung eines beispielhaften Datensatzes mit 2D-Codes. In der Wahrheitsmatrix erfolgt für jeden ausgewerteten Code ein Eintrag an einer X-Position der tatsächlichen und einer Y-Position der ermittelten Modulgrößen. Ein perfektes Template Matching würde nur Einträge auf der Diagonalen erzeugen. Dieser Situation nähern sich die gezeigten Wahrheitsmatrizen jedenfalls an. Bis zu einem gewissen Grad kann auch der Codetyp bestimmt werden. Diesbezügliche Ergebnisse können in einer ähnlichen Wahrheitsmatrix gesammelt werden, die aber nicht gezeigt ist.

Das Template Matching gibt durch seine Klassen einen gewissen Fehler entsprechend der Größe der Klassen vor, genauer kann die Modulgröße auf diesem Weg nicht geschätzt werden. Außerdem gibt es gewisse Schwierigkeiten, mit Referenzhistogrammen die gesamte Varianz an möglichen Codeleseszenarien abzudecken.

In einer weiteren Ausführungsform wird deshalb anstelle des Template Matchings ein Verfahren des maschinellen Lernens eingesetzt, hier erläutert am Beispiel eines neuronalen Netzes. Die zum Template Matching erläuterten Trainingsbeispiele können ebenso für ein überwachtes Lernen (supervised learning) des neuronalen Netzes verwendet werden, denn auf diesem Weg steht mit einem hohen Automatisierungsgrad eine große Vielzahl an Datensätzen samt zugehöriger richtiger Modulgröße (Label, Annotation) zur Verfügung.

Zur Vereinfachung wird angenommen, dass die Vorzugsrichtung horizontal oder vertikal bekannt ist, somit nur die beiden Histogramme für helle und dunkle Codeelemente die Eingangsdaten bilden. Bei je 20 Bins ergibt das einen 1x40 Einfangsvektor des neuronalen Netzes. Das neuronale Netz kann mit vollständig verbundenen Schichten (fully connected) aufgebaut werden, und es genügen wenige versteckte Schichten. Ausgangsseitig ist nur ein Skalar für die Modulgröße, möglicherweise ein Vektor mit zusätzlichen Ausgabegrößen wie Wertigkeit oder Codetyp erforderlich.

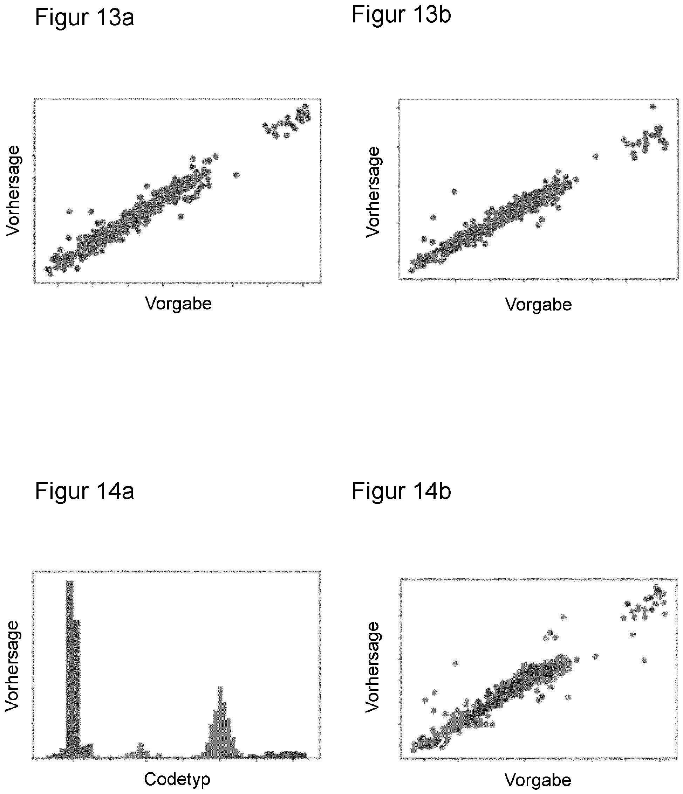

Die Figuren 13a-b zeigen jeweils einen Vergleich zwischen der Vorgabe (ground truth) und der Vorhersage des neuronalen Netzes für die Modulgröße. Im Idealfall würden sich alle Punkte auf einer Geraden mit Steigung eins befinden. In Figur 13a wurde ein neuronales Netz mit einer Eingangsschicht von 40 Neuronen, einer ersten versteckten Schicht mit 80 Neuronen, einer zweiten versteckten Schicht mit 40 Neuronen und einem Ausgangsneuron verwendet. In Figur 13b wurde ein kleineres neuronales Netz mit nur 10 Neuronen in der ersten verdeckten Schicht und nur 5 Neuronen in der zweiten versteckten Schicht verwendet. Das reduziert die Anzahl der zu lernenden Gewichte von etwa 6000 auf etwa 600, mit entsprechend geringeren Anforderungen an die Trainingsbeispiele und die Trainingszeit. Die Vorhersagekraft des kleineren normalen Netzes ist jedenfalls mit bloßem Auge ähnlich gut. Somit ist eine Implementierung auch bei begrenzten Rechenressourcen und unter Echtzeitanforderungen möglich.

Die Figuren 14a-b illustrieren abschließend die ergänzende Vorhersage des Codetyps auf einem zweiten Ausgangsneuron. Figur 14a zeigt die vier Cluster entsprechend den Codetypen C128, ITL25, 2D und PDF41. Figur 14b ist eine zugehörige Darstellung der vorhergesagten gegenüber den tatsächlichen Modulgrößen ähnlich den Figuren 13a-b, wobei die Punkte in den gleichen Grautönen entsprechend dem Codetyp der Figur 14a eingezeichnet sind. Der hier verwendete Trainingsdatensatz enthielt eine unterschiedliche Anzahl von Trainingsbeispielen je Codetyp. Das sollte beim Training berücksichtigt werden, beispielsweise durch bevorzugte Trainingswiederholung mit selteneren Codetypen. Noch besser ist es, mit einem ausgeglicheneren Datensatz zu trainieren

**Patentansprüche**

1. Verfahren zum Bestimmen der Modulgröße eines optischen Codes (20), bei dem Bilddaten mit dem Code (20) aufgenommen werden und die Modulgröße aus Abständen zwischen Hell-Dunkel-Übergängen in den Bilddaten geschätzt wird, wobei mindestens eine Häufigkeitsverteilung, insbesondere ein Histogramm, gebildet wird, die angibt, wie oft längs mindestens einer Linie durch den Code (20) dunkle und/oder helle Pixelfolgen einer jeweiligen Anzahl vorkommen, und die Modulgröße aus der Häufigkeitsverteilung geschätzt wird,
   **dadurch gekennzeichnet,**
   **dass** als die mindestens eine Häufigkeitsverteilung eine horizontale Häufigkeitsverteilung längs mindestens einer horizontalen Linie durch den Code (20) und eine vertikale Häufigkeitsverteilung längs mindestens einer vertikalen Linie durch den Code (20) gebildet wird.

2. Verfahren nach Anspruch 1,
   wobei jeweils für die horizontale Häufigkeitsverteilung und die vertikale Häufigkeitsverteilung eine dunkle Häufigkeitsverteilung für dunkle Pixelfolgen und eine helle Häufigkeitsverteilung für helle Pixelfolgen gebildet wird, so dass es dann vier Häufigkeitsverteilungen gibt.

3. Verfahren nach Anspruch 1 oder 2,
   wobei durch Vergleich einer ersten Schätzung der Modulgröße aus der horizontalen Häufigkeitsverteilung und einer zweiten Schätzung der Modulgröße aus der vertikalen Häufigkeitsverteilung eine Orientierung des Codes (20) in den Bilddaten bestimmt wird.

4. Verfahren nach einem der vorhergehenden Ansprüche,
   wobei die Modulgröße mit einer Orientierung des Codes (20) in den Bilddaten korrigiert wird.

5. Verfahren nach einem der vorhergehenden Ansprüche,
   wobei die mindestens eine Häufigkeitsverteilung längs einer Vielzahl zueinander paralleler Linien durch den Code (20) gebildet wird.

6. Verfahren nach einem der vorhergehenden Ansprüche,
   wobei die mindestens eine Häufigkeitsverteilung Pixelfolgen einer Anzahl größer einer Höchstschwelle nicht berücksichtigt und/oder wobei in der mindestens einen Häufigkeitsverteilung nur Häufigkeiten oberhalb einer Mindestschwelle berücksichtigt werden.

7. Verfahren nach einem der vorhergehenden Ansprüche,
   wobei die Modulgröße aus einer Position eines ersten Maximums in der mindestens einen Häufigkeitsverteilung bestimmt wird und/oder wobei aus der Anzahl und/oder Lage von Maxima in der mindestens einen Häufigkeitsverteilung eine Wertigkeit des Codes (20) bestimmt wird.

8. Verfahren nach einem der vorhergehenden Ansprüche,
   wobei die Modulgröße durch einen Vergleich der mindestens einen Häufigkeitsverteilung mit Referenzhäufigkeitsverteilungen für verschiedene Klassen von Modulgrößen bestimmt wird.

9. Verfahren nach einem der vorhergehenden Ansprüche,
   wobei die Modulgröße durch Bewerten der mindestens einen Häufigkeitsverteilung mit einem Verfahren des maschinellen Lernens, insbesondere mit einem neuronalen Netz bestimmt wird.

10. Verfahren nach Anspruch 8 oder 9,
    wobei das Verfahren mit Trainingsbeispielen mit Bilddaten oder Häufigkeitsverteilungen und zugehörigen Modulgrößen eingelernt wird.

11. Verfahren nach einem der vorhergehenden Ansprüche,
wobei in einer Vorverarbeitung die Bilddaten segmentiert werden, um einen Bildbereich (42) mit dem Code (20) zu finden und/oder die Bilddaten binarisiert werden.

12. Verfahren nach einem der vorhergehenden Ansprüche,
wobei der Code (20) nach dem Bestimmen der Modulgröße gelesen wird, wobei insbesondere der Code (20) mit einem anhand der Modulgröße ausgewählten und/oder durch die Modulgröße parametrierten Decodierverfahren gelesen wird.

13. Verfahren nach einem der vorhergehenden Ansprüche,
wobei die Modulgröße nur binär als kleine oder größere Modulgröße bestimmt wird, wobei insbesondere eine kleine Modulgröße unterhalb von zwei oder unterhalb eins liegt und eine größere Modulgröße entsprechen mindestens zwei oder mindestens eins beträgt.

14. Codeleser (10) zum Lesen von optischen Codes (20), der ein Lichtempfangselement (24) zum Erfassen von Bilddaten mit dem Code (20) und eine Steuer- und Auswertungseinheit (26) aufweist, die dafür ausgebildet ist, den Code (20) mit einem Decodierverfahren zu lesen,
**dadurch gekennzeichnet,**
**dass** die Steuer- und Auswertungseinheit (26) dafür ausgebildet ist, die Modulgröße des Codes (20) mit einem Verfahren nach einem der vorhergehenden Ansprüche zu bestimmen.

**Claims**

1. A method for determining the module size of an optical code (20), wherein image data with the code (20) are recorded and the module size is estimated from distances between light/dark transitions in the image data, at least one frequency distribution, in particular a histogram, is formed that indicates how often dark and/or light pixel sequences of a respective number occur along at least one line through the code (20), and the module size is estimated from the frequency distribution,
**characterized in that** a horizontal frequency distribution along at least one horizontal line through the code (20) and a vertical frequency distribution along at least one vertical line through the code (20) are formed as the at least one frequency distribution.

2. The method according to claim 1,
wherein a dark frequency distribution for dark pixel sequences and a light frequency distribution for light pixel sequences are formed for each of the horizontal frequency distribution and the vertical frequency distribution, so that there are four frequency distributions.

3. The method according to claim 1 or 2,
wherein an orientation of the code (20) in the image data is determined by comparing a first estimate of the module size from the horizontal frequency distribution and a second estimate of the module size from the vertical frequency distribution.

4. The method according to any of the preceding claims,
wherein the module size is corrected using an orientation of the code (20) in the image data.

5. The method according to any of the preceding claims,
wherein the at least one frequency distribution is formed along a plurality of mutually parallel lines through the code (20).

6. The method according to any of the preceding claims,

wherein the at least one frequency distribution does not take into account pixel sequences of a number greater than a maximum threshold and/or wherein in the at least one frequency distribution only frequencies above a minimum threshold are taken into account.

7. The method according to any of the preceding claims,

wherein the module size is determined from a position of a first maximum in the at least one frequency distribution
and/or wherein a type of the code (20) is determined from the number and/or position of maxima in the at least one frequency distribution.

8. The method according to any of the preceding claims,
wherein the module size is determined by a comparison of the at least one frequency distribution with reference frequency distributions for different classes of module sizes.

9. The method according to any of the preceding claims,
wherein the module size is determined by evaluating the at least one frequency distribution with a machine learning method, in particular with a neural network.

**10.** The method according to claim 8 or 9, wherein the method is learned using training examples with image data or frequency distributions and associated module sizes.

**11.** The method according to any of the preceding claims, wherein, in a preprocessing step, the image data is segmented to find an image area (42) comprising the code (20) and/or the image data is binarized.

**12.** The method according to any of the preceding claims, wherein the code (20) is read after the module size has been determined, in particular the code (20) is read using a decoding method selected on the basis of the module size and/or parameterized by the module size.

**13.** The method according to any of the preceding claims, wherein the module size is determined only in binary form as a small or larger module size, wherein in particular a small module size is below two or below one and a larger module size corresponds to at least two or at least one.

**14.** A code reader (10) for reading optical codes (20), comprising a light-receiving element (24) for detecting image data with the code (20) and a control and evaluation unit (26) which is configured to read the code (20) using a decoding method, **characterized in that** the control and evaluation unit (26) is configured to determine the module size of the code (20) using a method according to any of the preceding claims.

**Revendications**

**1.** Procédé pour déterminer la taille d'un module d'un code optique (20), dans lequel des données d'image sont enregistrées avec le code (20) et la taille du module est estimée à partir des distances entre les jonctions claires/foncées dans les données d'image, dans lequel au moins une distribution de fréquence, en particulier un histogramme, est formée qui indique combien de fois des séquences de pixels foncés et/ou clairs d'un nombre respectif apparaissent le long d'au moins une ligne à travers le code (20), et la taille du module est estimée à partir de la distribution de fréquence, **caractérisée en ce que**, en tant que ladite au moins une distribution de fréquence, une distribution de fréquence horizontale est formée le long d'au moins une ligne horizontale par le code (20) et une distribution de fréquence verticale est formée le long d'au moins une ligne verticale par le code (20).

**2.** Procédé selon la revendication 1, dans lequel une distribution de fréquence sombre pour les séquences de pixels sombres et une distribution de fréquence claire pour les séquences de pixels clairs sont formées respectivement pour la distribution de fréquence horizontale et la distribution de fréquence verticale, de sorte qu'il existe alors quatre distributions de fréquence.

**3.** Procédé selon la revendication 1 ou 2, dans lequel une orientation du code (20) dans les données d'image est déterminée en comparant une première estimation de la taille du module à partir de la distribution de fréquence horizontale et une deuxième estimation de la taille du module à partir de la distribution de fréquence verticale.

**4.** Procédé selon l'une des revendications précédentes, dans lequel la taille du module est corrigée avec une orientation du code (20) dans les données de l'image.

**5.** Procédé selon l'une des revendications précédentes, dans lequel ladite au moins une distribution de fréquence est formée le long d'une pluralité de lignes mutuellement parallèles par le code (20).

**6.** Procédé selon l'une des revendications précédentes, dans lequel ladite au moins une distribution de fréquence ne prend pas en compte les séquences de pixels d'un nombre supérieur à un seuil maximal et/ou dans lequel seules les fréquences supérieures à un seuil minimal sont prises en compte dans ladite au moins une distribution de fréquences,.

**7.** Procédé selon l'une des revendications précédentes,

dans lequel la taille du module est déterminée à partir d'une position d'un premier maximum dans ladite au moins une distribution de fréquence et/ou dans lequel une valence de code (20) est déterminé à partir du nombre et/ou de la position des maxima dans ladite au moins une distribution de fréquence.

**8.** Procédé selon l'une des revendications précédentes, dans lequel la taille du module est déterminée par une comparaison de ladite au moins une distribution de fréquence avec des distributions de fréquence de référence pour différentes classes de tailles de modules.

9. Procédé selon l'une des revendications précédentes,
dans lequel la taille du module est déterminée en évaluant ladite au moins une distribution de fréquence avec un procédé d'apprentissage automatique, en particulier avec un réseau neuronal.

10. Procédé selon la revendication 8 ou 9,
dans lequel le procédé est appris à l'aide d'exemples d'entraînement avec des données d'image ou des distributions de fréquence et des tailles de module correspondantes.

11. Procédé selon l'une des revendications précédentes,
dans lequel, dans un prétraitement, les données d'image sont segmentées pour trouver une zone d'image (42) avec le code (20) et/ou les données d'image sont binarisées.

12. Procédé selon l'une des revendications précédentes,
dans lequel le code (20) est lu après la détermination de la taille du module, dans lequel en particulier le code (20) est lu avec un procédé de décodage sélectionné à l'aide de la taille du module et/ou paramétré par la taille du module.

13. Procédé selon l'une des revendications précédentes,
dans lequel la taille du module est déterminée uniquement de manière binaire en tant qu'une taille de module petite ou plus grande, dans lequel en particulier une taille de module petite est notamment inférieure à deux ou inférieure à un et une taille de module plus grande correspondant à au moins deux ou au moins un.

14. Lecteur de code (10) pour lire des codes optiques (20), comprenant un élément de réception de lumière (24) pour la saisie de données d'image avec le code (20) et une unité de commande et d'évaluation (26) qui est configurée pour lire le code (20) avec un procédé de décodage,
**caractérisé en ce que**
l'unité de commande et d'évaluation (26) est configurée pour déterminer la taille du module du code (20) avec un procédé selon l'une des revendications précédentes.

Figur 1

Figur 2

Figur 3

Figur 4a

Figur 4b

Figur 5a

Figur 5b

Figur 6a

Figur 6b

Figur 7a

Figur 7b

Figur 8a

Figur 8b

Figur 9a

Figur 9b

Figur 10a

Figur 10b

Figur 11a

Figur 11b

## Figur 12a

```
confS =

     0      0      0      0      0      0      0      0      0
     0      2      0      0      0      0      0      0      0
     0     28     79      5      6      0      0      0      0
     0      1     21    278     82     33      0      0      0
     0      0      0    124    885    250      4      0      0
     0      0      0      1     10     32      3      0      0
     0      0      0      0      0      0      7      0      0
     0      0      0      0      0      0     13     26      8
     0      0      0      0      0      0      0      1     14
```

## Figur 12b

```
confB =

     0      0      0      0      0      0      0      0      0
     0      3      0      0      0      0      0      0      0
     0     29     12      6      0      0      0      0      0
     0      2     22    273      3      0      0      0      0
     0      1      1    125    883     33      0      0      0
     0      0      1      2     11      6      0      1      0
     0      0      0      0      0      0      8      0      0
     0      0      0      0      0      0     14     27      9
     0      0      0      0      0      0      0      0     15
```

Figur 13a

Figur 13b

Figur 14a

Figur 14b

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2003599 A1
- EP 2555160 B1
- EP 3916633 A1
- EP 1365577 A1
- US 5053609 A
- EP 3789906 A1
- CN 112329495 A
- JP H06325197 A
- EP 1580683 A1